# EUROPÄISCHE PATENTSCHRIFT

(11) **EP 3 691 507 B1**
(45) Veröffentlichungstag und Bekanntmachung des Hinweises auf die Patenterteilung: **27.03.2024**
(21) Anmeldenummer: 18779347.6
(22) Anmeldetag: 26.09.2018
(51) Int. Cl.: A47L 15/00, A47L 15/42

(54) **WASSERFÜHRENDES HAUSHALTSGERÄT UND VERFAHREN ZUM BETREIBEN EINES WASSERFÜHRENDEN HAUSHALTSGERÄTS**
WATER-USING DOMESTIC APPLIANCE AND METHOD FOR OPERATING A WATER-USING DOMESTIC APPLIANCE
APPAREIL MÉNAGER À CIRCULATION D'EAU ET PROCÉDÉ PERMETTANT DE FAIRE FONCTIONNER UN APPAREIL MÉNAGER À CIRCULATION D'EAU

(30) Priorität: 06.10.2017 DE 102017217801
(43) Veröffentlichungstag der Anmeldung: 12.08.2020
(60) Teilanmeldung: 22210043.0
(73) Patentinhaber: BSH Hausgeräte GmbH, 81739 München (DE)
(72) Erfinder: HEINLE, Martin, 89353 Glött (DE); OBLINGER, Anton, 86637 Wertingen (DE)
(86) Internationale Anmeldenummer: PCT/EP2018/076070
(87) Internationale Veröffentlichungsnummer: WO 2019/068528

(56) Entgegenhaltungen:
- WO-A1-2011/080090
- DE-C2- 3 745 169
- GB-A- 2 096 456
- KR-A- 20020 047 874

## Beschreibung

Die vorliegende Erfindung betrifft ein wasserführendes Haushaltsgerät und ein Verfahren zum Betreiben eines wasserführenden Haushaltsgeräts.

Eine Geschirrspülmaschine weist einen Spülbehälter auf, an dessen Boden ein Pumpentopf vorgesehen sein kann. In dem Pumpentopf ist üblicherweise ein Filtersieb zum Filtern von Spülflotte angeordnet. Zum Reinigen des Filtersiebs kann dieses entnommen und manuell gereinigt werden.

Weiterhin zeigt die US 7,431,774 B2 eine Geschirrspülmaschine mit einem Pumpentopf und einem in dem Pumpentopf angeordneten Filter. In dem Pumpentopf sind Reinigungsdüsen vorgesehen, die eine Vielzahl an Fluidaustrittsöffnungen zum Anspritzen des Filters aufweisen.

Die DE 37 45 169 C2 beschreibt eine Geschirrspülmaschine mit einem Spülbehälter, einer Austragspumpe, einer Zuflussleitung für den Spülbehälter, einer Einrichtung zum Erzeugen einer Umlaufwasserströmung des in den Spülbehälter eingelassenen Waschwassers, wobei die Strömung in einer Richtung durch ein becherförmiges Filter tritt, und mit wenigstens einer weiteren Leitung, die an einem Ende mit der Zuflussleitung verbunden ist und am anderen Ende eine Austrittsöffnung für einen auf das Filter entgegen der Richtung der Umlaufwasserströmung einwirkenden Spülwasserstrahl aufweist.

Vor diesem Hintergrund besteht eine Aufgabe der vorliegenden Erfindung darin, ein verbessertes wasserführendes Haushaltsgerät zur Verfügung zu stellen.

Demgemäß wird ein wasserführendes Haushaltsgerät, insbesondere eine Haushalts-Geschirrspülmaschine, mit einem Pumpentopf, einem zumindest abschnittsweise in dem Pumpentopf angeordneten Filterelement und einer Düseneinrichtung bereitgestellt, die an dem Pumpentopf angeordnet ist, wobei die Düseneinrichtung dazu eingerichtet ist, eine lediglich in einer Strömungsrichtung um das Filterelement herumströmende Ringströmung zwischen dem Pumpentopf und dem Filterelement zum Ablösen von Schmutz von dem Filterelement zu erzeugen.

Überraschend wurde festgestellt, dass mit Hilfe der Ringströmung eine homogene Reinigungswirkung, insbesondere über 360°, am Filterelement bewirkt werden kann. Das Filterelement ist vorzugsweise von einer Filteraufnahme des Filterelements aufgenommen. Eine "Strömungsrichtung" meint vorliegend, eine Strömung im Uhrzeigersinn oder entgegen dem Uhrzeigersinn. Vorzugsweise verläuft die Strömungsrichtung entlang eines im Wesentlichen kreisförmigen oder ovalen Pfads. Vorzugsweise ist die Düseneinrichtung zumindest abschnittsweise zwischen dem Pumpentopf und dem Filterelement angeordnet. "Ringströmung" meint einen Fluidmassenstrom, insbesondere einen Spülflottenmassenstrom. "Spülflotte" meint vorliegend eine Fluid wie beispielsweise Wasser, das beispielsweise Reinigungszusätze und gegebenenfalls Schmutz enthalten kann. Vorzugsweise ist die Düseneinrichtung ein von dem Pumpentopf separates Bauteil, das beispielsweise Kunststoff oder Metall umfasst oder aus Kunststoff oder Metall gebildet ist. Alternativ kann die Düseneinrichtung materialeinstückig an den Pumpentopf angeformt sein. Die Düseneinrichtung umfasst vorzugsweise einen Kanal zum Kanalisieren eines Fluids bzw. von Spülflotte.

Gemäß einer Ausführungsform umfasst das Filterelement einen Mikrofilter, der rohrförmig ausgebildet ist, eine einen Innenraum des Mikrofilters umschließende Mikrofilterinnenseite und eine Mikrofilteraußenseite, wobei die Düseneinrichtung dazu eingerichtet ist, die Ringströmung um die Mikrofilteraußenseite zu erzeugen, so dass der Schmutz von der Mikrofilterinnenseite zu dem Innenraum hin abgelöst wird.

Dies hat den Vorteil, dass die Mikrofilterinnenseite, an der eine erhöhte Verschmutzungstendenz vorliegen kann, gereinigt und der entsprechende Schmutz direkt aus dem Innenraum abgesaugt werden kann. Ferner kann das Filterelement einen Grobfilter umfassen, der oberhalb des Mikrofilters angeordnet ist und beispielsweise mit diesem verbunden ist. Weiterhin kann das Filterelement einen Feinfilter umfassen, der beispielsweise oberhalb des Mikrofilters und gegebenenfalls um den Grobfilter herum angeordnet ist. Der Feinfilter kann beispielsweise als flache und feine Siebstruktur ausgebildet sein. Der Grobfilter kann beispielsweise eine Topfform aufweisen und als grobe Siebstruktur ausgebildet sein. Auch der Mikrofilter kann als Siebstruktur ausgebildet sein. Weiterhin kann radial außerhalb und/oder radial innerhalb der Siebstruktur des Mikrofilters eine weitere sich von der Siebstruktur unterscheidende weitere rohrförmige Siebstruktur ausgebildet sein. Der Mikrofilter kann somit beispielsweise aus unterschiedlichen Siebstrukturen gebildet sein. Die Mikrofilterinnenseite und/oder die Mikrofilteraußenseite kann beispielsweise im Wesentlichen eine zylindermantelförmige Gestallt aufweisen. Die Mikrofilterinnenseite und/oder die Mikrofilteraußenseite kann beispielsweise eine endlosfaltenbalgförmige Gestallt aufweisen. "Rohrförmig" meint vorliegend, dass der Mikrofilter im Querschnitt ringförmig, insbesondere kreisringförmig, ausgebildet ist. Vorzugsweise umfasst die Düseneinrichtung lediglich Fluidaustrittsöffnungen oder eine Fluidaustrittsöffnung, die jeweils dazu eingerichtet sind, einen im Wesentlichen tangential zu einer Rohrform des Mikrofilters verlaufenden Fluidaustritt zu formen bzw. zu gewährleisten.

Gemäß einer weiteren Ausführungsform umfasst das wasserführende Haushaltsgerät eine Laugenpumpe, die dazu eingerichtet ist, Spülflotte samt Schmutz direkt aus dem Innenraum abzusaugen.

Dies hat den Vorteil, dass der Schmutz direkt aus dem Innenraum, in welchem der Schmutz die größte Verstopfungswirkung entfaltet, abgesaugt werden kann. Der Pumpentopf umfasst beispielsweise eine Öffnung, die dem Innenraum des Mikrofilters zugewandt ist und durch die die Laugenpumpe Spülflotte aus dem Innenraum des Mikrofilters ansaugt. Die Laugenpumpe ist beispielsweise dazu eingerichtet, Spülflotte samt Schmutz hin zu einem Abfluss außerhalb des Haushaltsgeräts abzusaugen bzw. zu fördern.

Erfindungsgemäß weist der Pumpentopf eine Seitenwandung auf, die das Filterelement umgibt, so dass ein Ringspalt zwischen dem Filterelement und der Seitenwandung ausgebildet ist.

Beispielsweise ist die Seitenwandung eine Wandung der Filteraufnahme des Pumpentopfs. An die Seitenwandung kann beispielsweise eine Bodenwandung angeformt sein, die zusammen die Filteraufnahme bilden. Die Seitenwandung und das Filterelement sind derart angeordnet, dass die Ringströmung geformt bzw. gebildet wird. Dabei verläuft die Ringströmung entlang der Wandung. Die Seitenwandung umgibt das Filterelement beispielsweise radial und erstreckt sich in eine Tiefenrichtung, die beispielsweise senkrecht nach unten zeigt. Beispielsweise weist die Seitenwandung eine radiale Öffnung auf, durch die vom Filterelement gefilterte und von dem Innenraum des Mikrofilters zu dem Ringspalt strömende Spülflotte gefördert werden kann. Der Ringspalt kann als Ringraum zwischen dem Mikrofilter und der Filteraufnahme gesehen werden.

Nach einer ersten erfindungsgemäßen Alternative umfasst die Düseneinrichtung einen ersten Düsenabschnitt, der von oben in den Ringspalt hineinragt.

Dies hat den Vorteil, dass ein Anfangsbereich der Ringströmung genau und insbesondere tangential zu der Rohrform des Mikrofilters ausgerichtet werden kann. Vorzugsweise umfasst der erste Düsenabschnitt eine oder mehrere Fluidaustrittsöffnungen, die jeweils dazu eingerichtet sind, den im Wesentlichen tangential zu der Rohrform des Mikrofilters verlaufenden Fluidaustritt zu formen bzw. zu gewährleisten.

Gemäß einer weiteren Ausführungsform umfasst die Düseneinrichtung einen zweiten Düsenabschnitt, an den der erste Düsenabschnitt angeformt ist und der sich von dem Ringspalt weg erstreckt.

Der zweite Düsenabschnitt erstreckt sich beispielsweise radial oder tangential weg von der Rohrform des Mikrofilters. Dies hat den Vorteil, dass Strömungsverluste reduziert werden können, da ein Kanal des zweiten Düsenabschnitts weniger oder keine Krümmungen aufweist.

Nach einer zweiten erfindungsgemäßen Alternative ist der erste Düsenabschnitt um das Filterelement herum gekrümmt.

Dies hat den Vorteil, dass der erste Düsenabschnitt ideal in den Ringspalt hineinpasst, da der erste Düsenabschnitt beispielsweise dem Verlauf des Ringspalts in einem Abschnitt des Ringspalts folgt. Beispielsweise ist der erste Düsenabschnitt kreisringsegmentförmig.

Gemäß einer weiteren Ausführungsform umfasst das wasserführende Haushaltsgerät eine Wasserweiche, die dazu eingerichtet ist, eine Fluidzufuhr zu der Düseneinrichtung zu unterbrechen, so dass die Ringströmung unterbrochen wird.

Dies hat den Vorteil, dass die Düseneinrichtung bzw. die Ringströmung gezielt zugeschaltet werden kann und daher nicht permanent während eines Spülvorgangs des Haushaltsgeräts laufen muss.

Gemäß einer weiteren Ausführungsform umfasst das wasserführende Haushaltsgerät einen Sprüharm und/oder zwei Sprüharme und/oder eine Deckensprüheinrichtung, wobei die Wasserweiche dazu eingerichtet ist, eine Fluidzufuhr zu dem Sprüharm und/oder den zwei Sprüharmen und/oder der Deckensprüheinrichtung zu unterbrechen und/oder zu steuern.

Beispielsweise umfasst der Pumpentopf eine Umwälzpumpe, die dazu eingerichtet ist, Spülflotte umzuwälzen und den ersten Sprüharm und/oder den zweiten Sprüharm und/oder die Deckensprüheinrichtung mit Spülflotte zu versorgen. Es versteht sich, dass entsprechende Kanäle ausgebildet sind.

Weiterhin wird ein Verfahren zum Betreiben eines wasserführenden Haushaltsgeräts, insbesondere wie vorstehend beschrieben, bereitgestellt, wobei mit Hilfe einer Düseneinrichtung ein lediglich in einer Strömungsrichtung um ein Filterelement herumströmende Ringströmung zwischen einem Pumpentopf und dem Filterelement zum Ablösen von Schmutz von dem Filterelement erzeugt wird.

Gemäß einer weiteren Ausführungsform, wird die Ringströmung zwischen 20 und 240 Sekunden lang, bevorzugt zwischen 40 und 220 Sekunden lang und weiter bevorzugt zwischen 60 und 180 Sekunden lang erzeugt.

Erfindungsgemäß wird ein erster Spülvorgang, bei dem Spülflotte innerhalb des wasserführenden Haushaltsgeräts zirkuliert, durchgeführt, wobei nach dem ersten Spülvorgang ein erstes Absaugen von Spülflotte samt Schmutz mit Hilfe einer Laugenpumpe durchgeführt wird, und wobei die Ringströmung während, insbesondere am Ende, des ersten Spülvorgangs erzeugt wird.

Beispielsweise wird die Ringströmung vor dem ersten Absaugen von Spülflotte unterbrochen. "Absaugen" kann vorliegend auch als Abpumpen bezeichnet werden.

Gemäß einer weiteren Ausführungsform wird nach dem ersten Absaugen ein zweiter Spülvorgang, bei dem Spülflotte innerhalb des wasserführenden Haushaltsgeräts zirkuliert, durchgeführt, wobei nach dem zweiten Spülvorgang ein zweites Absaugen von Spülflotte samt Schmutz mit Hilfe der Laugenpumpe durchgeführt wird, und wobei die Ringströmung während, insbesondere am Ende, des zweiten Spülvorgangs erzeugt wird.

Beispielsweise wird die Ringströmung vor dem zweiten Absaugen von Spülflotte unterbrochen.

Gemäß einer weiteren Ausführungsform wird während eines Absaugens von Spülflotte samt Schmutz mit Hilfe einer Laugenpumpe die Ringströmung erzeugt.

Gemäß einer weiteren Ausführungsform wird die Ringströmung mit Hilfe eines Umschaltens einer Wasserweiche zugeschaltet.

Die für die vorgeschlagene Vorrichtung beschriebenen Ausführungsformen, Merkmale und Vorteile gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines wasserführenden Haushaltsgeräts;
Fig. 2 zeigt in einer schematischen Aufsicht betrachtet eine erste Ausführungsform einer Bodenanordnung des wasserführenden Haushaltsgeräts gemäß Fig. 1;
Fig. 3 zeigt in einer schematischen Aufsicht betrachtet eine zweite Ausführungsform einer Bodenanordnung des wasserführenden Haushaltsgeräts gemäß Fig. 1; und
Fig. 4 zeigt ein schematisches Schaubild eines Spülprozesses für das wasserführende Haushaltsgerät gemäß Fig. 1.

In den Figuren sind gleiche oder funktionsgleiche Elemente mit denselben Bezugszeichen versehen worden, sofern nichts anderes angegeben ist.

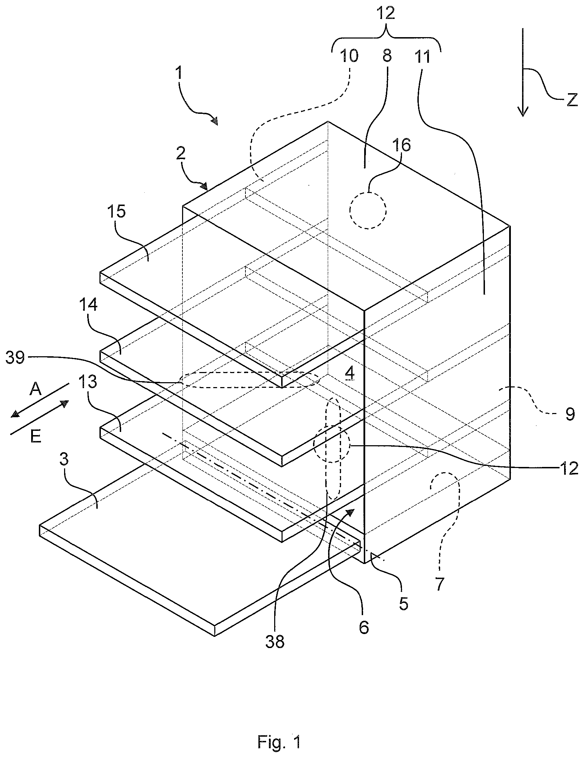

Die Fig. 1 zeigt eine schematische perspektivische Ansicht eines wasserführenden Haushaltsgeräts 1, insbesondere einer Haushalts-Geschirrspülmaschine. Das Haushaltsgerät 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse des Haushaltsgeräts 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist ein Bodenblech 7, eine dem Bodenblech 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Das Bodenblech 7, die Decke 8, die Rückwand 9 und die Seitenwände 10, 11 können beispielsweise aus einem Stahlblech gefertigt sein. Insbesondere kann beispielsweise das Bodenblech 7 aus einem anderen Material gefertigt sein als die Decke 8 und die Seitenwände 10, 11. Beispielsweise kann das Bodenblech 7 aus dem Werkstoff 1.4301, die Decke 8 und die Seitenwände 10, 11 aus dem Werkstoff 1.4016 und die Rückwand 9 ebenfalls aus dem Werkstoff 1.4016 gefertigt sein. Das Bodenblech 7 kann ferner aus einem Kunststoffmaterial gefertigt sein.

Das Haushaltsgerät 1 weist ferner eine an dem Bodenblech 7 vorgesehenen Bodenanordnung 12 auf. Das Haushaltsgerät 1 weist ferner zumindest eine Spülgutaufnahme 13 bis 15 auf. Vorzugsweise können mehrere, beispielsweise drei, Spülgutaufnahmen 13 bis 15 vorgesehen sein, wobei die Spülgutaufnahme 13 eine untere Spülgutaufnahme oder ein Unterkorb, die Spülgutaufnahme 14 eine obere Spülgutaufnahme oder ein Oberkorb und die Spülgutaufnahme 15 eine Besteckschublade sein kann. Wie die Fig. 1 weiterhin zeigt, sind die Spülgutaufnahmen 13 bis 15 übereinander in dem Spülbehälter 2 angeordnet. Jede Spülgutaufnahme 13 bis 15 ist wahlweise in den Spülbehälter 2 hinein- oder aus diesem herausverlagerbar. Insbesondere ist jede Spülgutaufnahme 13 bis 15 in einer Einschubrichtung E in den Spülbehälter 2 hineinschiebbar und entgegen der Einschubrichtung E in einer Auszugsrichtung A aus dem Spülbehälter 2 herausziehbar.

Weiterhin ist an der Decke 6 eine Deckensprüheinrichtung 16 vorgesehen, die dazu eingerichtet ist, Spülflotte in dem Spülraum 4 zu versprühen. Ferner ist ein Sprüharm 38 (vorliegend auch als erster Sprüharm bezeichnet) zwischen dem Bodenblech 7 und der Spülgutaufnahme 13 vorgesehen. Der Sprüharm 38 ist drehbar mit dem Bodenblech 7 und/oder der Bodenanordnung 12 verbunden und dazu eingerichtet, Spülflotte in dem Spülraum 4 zu versprühen. Außerdem ist ein Sprüharm 39 (vorliegend auch als zweiter Sprüharm bezeichnet) vorgesehen, der mit einer Unterseite der Spülgutaufnahme 14 drehbar verbunden ist und der dazu eingerichtet ist, Spülflotte in dem Spülraum 4 zu versprühen.

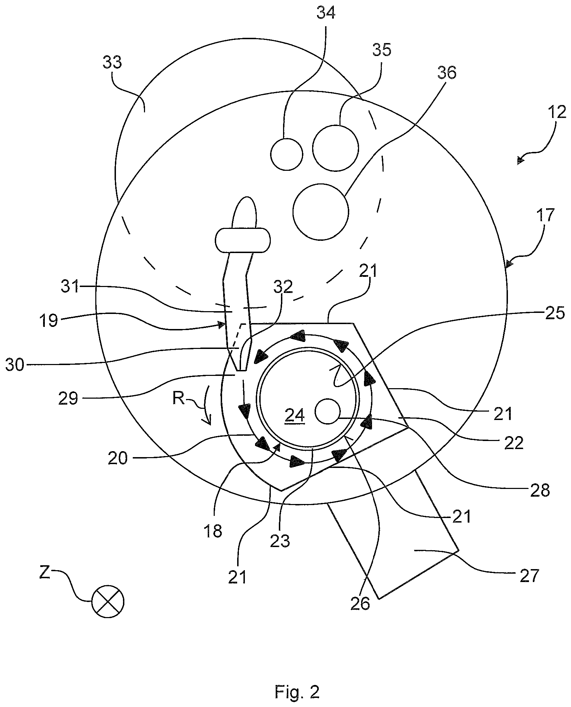

Fig. 2 zeigt eine erste Ausführungsform der Bodenanordnung 12 des Haushaltsgeräts 1 von einer schematischen Aufsicht betrachtet. Die Bodenanordnung 12 umfasst einen Pumpentopf 17, ein zumindest abschnittsweise in dem Pumpentopf 17 angeordnetes Filterelement 18 und eine Düseneinrichtung 19, die zumindest abschnittsweise zwischen dem Pumpentopf 17 und dem Filterelement 18 angeordnet ist, wobei die Düseneinrichtung 19 dazu eingerichtet ist, eine lediglich in einer Strömungsrichtung R um das Filterelement 18 herumströmende Ringströmung 20 zwischen einer Seitenwandung 21 des Pumpentopfs 17 und dem Filterelement 18 zum Ablösen von Schmutz von dem Filterelement 18 zu erzeugen.

Der Pumpentopf 17 kann einstückig, insbesondere materialeinstückig, mit dem Spülbehälter 2, insbesondere mit dem Bodenblech 7, ausgebildet sein. Dabei erstreckt sich die Seitenwandung 21 in eine Tiefenrichtung z, die von der Decke 8 (siehe Fig. 1) senkrecht nach unten zum Bodenblech 7 (siehe Fig. 1) zeigt. Weiterhin verläuft die Strömungsrichtung R senkrecht zu der Tiefenrichtung z und beispielsweise gegen den Urzeigersinn in der Aufsicht betrachtet. Alternativ kann die Strömungsrichtung R im Urzeigersinn in der Aufsicht betrachtet verlaufen. An die Seitenwandung 21 ist eine Bodenwandung 22 angeformt, die vorzugsweise im Wesentlichen senkrecht zu der Seitenwandung 21 verläuft und auf der das Filterelement 18 steht. Die Seitenwandung 21 und die Bodenwandung 22 bilden eine Filteraufnahme des Pumpentopfs 17 aus.

Das Filterelement 18 umfasst einen Mikrofilter 23, der rohrförmig ausgebildet ist, eine einen Innenraum 24 des Mikrofilters 23 umschließende Mikrofilterinnenseite 25 aufweist und eine Mikrofilteraußenseite 26 aufweist, wobei die Düseneinrichtung 19 dazu eingerichtet ist, die Ringströmung 20 um die Mikrofilteraußenseite 26 zu erzeugen, so dass der Schmutz von der Mikrofilterinnenseite 25 zu dem Innenraum 24 hin abgelöst wird. Die Bodenanordnung 12 umfasst weiterhin eine Laugenpumpe 27, die dazu eingerichtet ist, Spülflotte samt Schmutz direkt aus dem Innenraum 24 abzusaugen. Dafür ist eine unterhalb des Innenraums 24 angeordnete Öffnung 28 des Pumpentopfs 17 vorgesehen, die dem Innenraum 24 zugewandt ist und mit der Laugenpumpe 27 mit Hilfe eines unterhalbe der Öffnung 28 angeordneten Fluidkanals (nicht gezeigt) fluidverbunden ist.

Die Seitenwandung 21 umgibt das Filterelement 18 derart, dass ein Ringspalt 29 zwischen dem Filterelement 18 und der Seitenwandung 21 ausgebildet ist. Die Seitenwandung 21 weist dabei von der Aufsicht betrachtet eine eckige Gestallt auf, wobei die Seitenwandung 21 abgerundete und abgeflachte Wandabschnitte aufweist. Alternativ könnte die Seitenwandung 21 in der Aufsicht betrachtet keine Ecken aufweisen und beispielsweise eine kreisrunde oder ovale Kontur aufweisen.

Die Düseneinrichtung 19 umfasst einen ersten Düsenabschnitt 30, der von oben in den Ringspalt 29 hineinragt und eine Fluidaustrittsöffnung 32 aufweist, aus welcher ein Fluidstrahl die Düseneinrichtung 19 zum Ausbilden der Ringströmung 20 verlässt. Außerdem umfasst die Düseneinrichtung 19 einen zweiten Düsenabschnitt 31, an dem der erste Düsenabschnitt 30 angeformt ist, wobei sich der zweite Düsenabschnitt 31 von dem Ringspalt 29 weg erstreckt. Vorzugsweise sind lediglich Fluidaustrittsöffnungen 32 an der Düseneinrichtung 19 vorgesehen, die jeweils dazu eingerichtet sind, einen im Wesentlichen tangential zu der Ringform des Mikrofilters 23 verlaufenden Fluidaustritt zu formen bzw. zu gewährleisten. Mit anderen Worten ist beispielsweise keine Fluidaustrittsöffnung an der Düseneinrichtung 19 vorgesehen, die einen Fluidaustritt direkt hin zu dem Innenraum 24 formt.

Weiterhin umfasst die Bodenanordnung 12 eine Wasserweiche 33, die dazu eingerichtet ist, eine Fluidzufuhr zu der Düseneinrichtung 19 zu unterbrechen, so dass die Ringströmung 20 unterbrochen wird. Weiterhin ist die Wasserweiche 33 dazu eingerichtet, eine Fluidzufuhr zu dem Sprüharm 38 (siehe Fig. 1) und/oder dem Sprüharm 39 (siehe Fig. 1) und/oder der Deckensprüheinrichtung 16 (siehe Fig. 1) zu unterbrechen und/oder zu steuern. Der Pumpentopf 17 umfasst ferner eine erste Öffnung 34, mit Hilfe welcher die Deckensprüheinrichtung 16 mit Spülflotte versorgt wird und/oder eine zweite Öffnung 35, mit Hilfe welcher der Sprüharm 39 mit Spülflotte versorgt wird und/oder eine dritte Öffnung 36 mit Hilfe welcher der Sprüharm 38 mit Spülflotte versorgt wird.

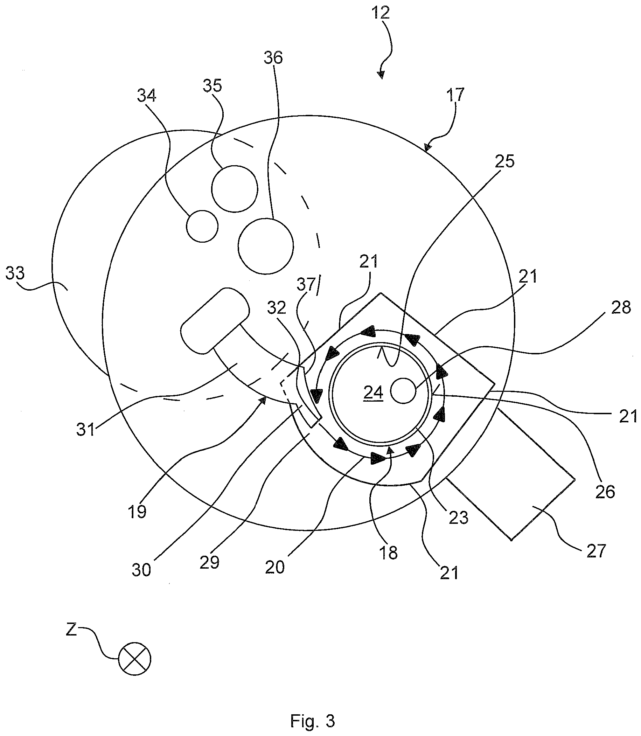

Fig. 3 zeigt eine zweite Ausführungsform der Bodenanordnung 12 des Haushaltsgeräts 1 von einer schematischen Aufsicht betrachtet. Im Unterschied zu Fig. 2 ist der erste Düsenabschnitt 30 um das Filterelement 18 herum gekrümmt. Dabei ist eine Wandung 37 des ersten Düsenabschnitts 30, dem Filterelement 18 zugewandt und an die Rohrform des Mikrofilters 23 angepasst. Dies hat den Vorteil, dass der erste Düsenabschnitt 30 ideal in den Ringspalt 29 hineinpasst, da der erste Düsenabschnitt 30 dem Verlauf des Ringspalts 29 zumindest abschnittsweise folgt.

Beispielsweise erstreckt sich der erste Düsenabschnitt 30 aus dem Ringspalt 29 entgegen der Tiefenrichtung z heraus und geht in den zweiten Düsenabschnitt 31 über, der sich hin zu der Wasserweiche 33 erstreckt. Dabei erstreckt sich der zweite Düsenabschnitt 31 im Wesentlichen senkrecht zu der Tiefenrichtung z.

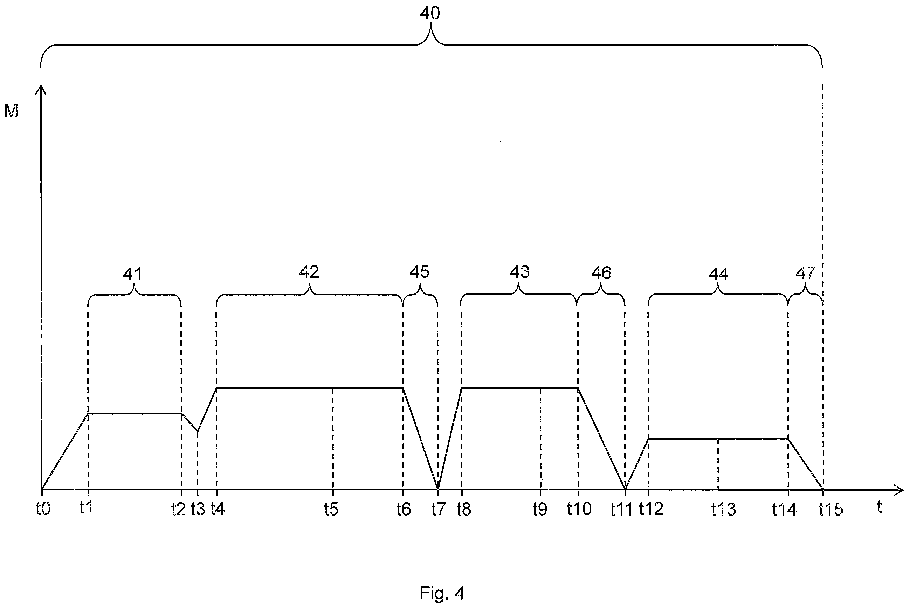

Fig. 4 zeigt ein schematisches Schaubild eines beispielhaften Spülprozesses 40 für das wasserführende Haushaltsgerät 1 gemäß Fig. 1. Dabei ist eine Spülflottenmenge M, die in einem Spülkreislauf des Haushaltsgeräts 1 mittels einer Umwälzpumpe (nicht gezeigt) des Pumpentopfs 17 umgewälzt wird, über eine Zeit t, während welcher der Spülprozess 40 läuft, aufgetragen.

Bei einem Zeitpunkt t0 beginnt der Spülprozess 40. Zwischen dem Zeitpunkt t0 und einem Zeitpunkt t1 wird mittels Frischwasserzufuhr die Spülflottenmenge M erhöht. Zwischen den Zeitpunkten t1 und t2 wird ein Vorspülvorgang 41 gestartet. Zwischen dem Zeitpunkt t2 und einem Zeitpunkt t3 wird die Laugenpumpe 27 aktiviert und dadurch die Spülflottenmenge M verringert. Anschließend wird die Spülflottenmenge M bis zu einem Zeitpunkt t4 erhöht und ein Spülvorgang 42 (vorliegend auch als erster Spülvorgang bezeichnet) gestartet, der bis zu dem Zeitpunkt t6 durchgeführt wird. Bei dem Spülvorgang 42 zirkuliert Spülflotte innerhalb des wasserführenden Haushaltsgeräts 1. Das Zirkulieren (oder Umwälzen) wird mit Hilfe der Umwälzpumpe ausgeführt. Zwischen dem Zeitpunkt t6 und t7 wird die Laugenpumpe 27 aktiviert und Spülflotte beispielsweise im Wesentlichen vollständig oder teilweise abgepumpt. Dies kann als Absaugen 45 (vorliegend auch als erstes Absaugen bezeichnet) bezeichnet werden.

Zwischen dem Zeitpunkt t7 und einem Zeitpunkt t8 wird dem Haushaltsgerät 1 Frischwasser zugeführt und dadurch die Spülflottenmenge M erhöht, wobei bei dem Zeitpunkt t8 ein weiterer Spülvorgang 43 (vorliegend auch als zweiter Spülvorgang bezeichnet) gestartet wird, der bis zu einem Zeitpunkt t10 durchgeführt wird. Zwischen dem Zeitpunkt t10 und einem Zeitpunkt t11 wird die Laugenpumpe 27 aktiviert und Spülflotte beispielsweise im Wesentlichen vollständig oder teilweise abgepumpt. Dies kann als Absaugen 46 (vorliegend auch als zweites Absaugen bezeichnet) bezeichnet werden, wobei Spülflotte samt Schmutz mit Hilfe der Laugenpumpe 27 abgesaugt wird. Zwischen dem Zeitpunkt t11 und einem Zeitpunkt t12 wird dem Haushaltsgerät 1 Frischwasser zugeführt und dadurch die Spülflottenmenge M erneut erhöht, wobei bei dem Zeitpunkt t12 ein Klarspülvorgang 44 gestartet wird, der bis zu einem Zeitpunkt t14 durchgeführt wird. Zwischen dem Zeitpunkt t14 und einem Zeitpunkt t15 wird die Laugenpumpe 27 aktiviert und Spülflotte im Wesentlichen vollständig abgepumpt. Dies kann als Absaugen 47 (beispielsweise drittes Absaugen) bezeichnet werden. Beispielsweise ist der Spülprozess 40 bei dem Zeitpunkt t15 beendet. Es versteht sich, dass Trocknungsvorgänge im Anschluss an den Spülprozess 40 folgen können.

Die Ringströmung 20 wird vorzugsweise während, insbesondere am Ende, des Spülvorgangs 42 zwischen einem Zeitpunkt t5 und dem Zeitpunkt t6 und/oder dem Zeitpunkt t7 erzeugt. Nach dem Absaugen 45 wird der Spülvorgang 43, bei dem Spülflotte innerhalb des wasserführenden Haushaltsgeräts 1 zirkuliert, durchgeführt, wobei nach dem Spülvorgang 43 das Absaugen 46 von Spülflotte samt Schmutz mit Hilfe der Laugenpumpe 27 durchgeführt wird, und wobei die Ringströmung 20 während, insbesondere am Ende, des zweiten Spülvorgangs 43 zwischen einem Zeitpunkt t9 und dem Zeitpunkt t10 und/oder t11 erzeugt wird. Weiterhin wird beispielsweise die Ringströmung 20 während, insbesondere am Ende, des Klarspülvorgangs 44 zwischen einem Zeitpunkt t13 und dem Zeitpunkt t14 und/oder t15 erzeugt. Vorzugsweise weist während des Absaugens 47 abgepumpte Spülflotte eine höhere Temperatur auf als während des Absaugens 45 oder des Absaugens 46 abgepumpte Spülflotte. Die Temperatur von Spülflotte kann vor oder während des Absaugens 47 55°C bis 65°C, insbesondere 58°C oder 63°C, betragen. Aufgrund der höheren Temperatur kann eine erhöhte Reinigungswirkung an dem Filterelement 18 erzielt werden. Weiterhin kann die Ringströmung 20 zwischen dem Zeitpunkt t13 und dem Zeitpunkt t14 oder dem Zeitpunkt t15 länger aktiviert werden als die Ringströmung 20 zwischen dem Zeitpunkt t5 und dem Zeitpunkt t6 oder dem Zeitpunkt t7 und/oder als die Ringströmung 20 zwischen dem Zeitpunkt t9 und dem Zeitpunkt t10 oder dem Zeitpunkt t11.

Die Ringströmung 20 kann beispielsweise zwischen 20 und 240 Sekunden lang, bevorzugt zwischen 40 und 220 Sekunden lang und weiter bevorzugt zwischen 60 und 180 Sekunden lang erzeugt werden. Beispielsweise wird die Ringströmung 20 zwischen den Zeitpunkten t5 und t6 oder t7 90 Sekunden lang erzeugt. Beispielsweise wird die Ringströmung 20 zwischen den Zeitpunkten t9 und t10 oder t11 90 Sekunden lang erzeugt. Beispielsweise wird die Ringströmung 20 zwischen den Zeitpunkten t13 und t14 oder t15 180 Sekunden lang erzeugt. Beispielsweise wird die Ringströmung 20 während eines Absaugens 45, 46, 47 von Spülflotte samt Schmutz mit Hilfe der Laugenpumpe 27 erzeugt. Die Ringströmung 20 kann beispielsweise auch genau einmal, zweimal, dreimal, viermal oder fünfmal während des Spülprozesses 40 aktiviert werden, z. B. bei dem Vorspülvorgang 41 und/oder bei dem Spülvorgang 42 und/oder bei dem Spülvorgang 43 und/oder bei dem Klarspülvorgang 44 und/oder bei dem Absaugen 45 und/oder bei dem Absaugen 46 und/oder bei dem Absaugen 47.

Beispielsweise wird die Ringströmung 20 jeweils mit Hilfe eines Umschaltens der Wasserweiche 33 zugeschaltet. Bei dem Vorspülvorgang 41, dem ersten Spülvorgang 42, dem zweiten Spülvorgang 43, und dem Klarspülvorgang 44 bleibt die Spülflottenmenge M im Wesentlichen konstant. Es versteht sich, dass die Zeitpunkte t0 bis t15 nach zeitlicher Reinfolge nummeriert sind. Der Spülvorgang 42 kann als Reinigungsphase und der Spülvorgang 43 als Zwischenspülphase bezeichnet werden. Beispielsweise können die Laugenpumpe 27 und die Düseneinrichtung 19 gleichzeitig aktiviert werden, um einen erhöhten Ablöseeffekt auf den Schmutz zu bewirken.

Obwohl die vorliegende Erfindung anhand von Ausführungsbeispielen beschrieben wurde, ist sie vielfältig modifizierbar.

### Verwendete Bezugszeichen:

- 1: Haushaltsgerät
- 2: Spülbehälter
- 3: Tür
- 4: Spülraum
- 5: Schwenkachse
- 6: Beschickungsöffnung
- 7: Bodenblech
- 8: Decke
- 9: Rückwand
- 10: Seitenwand
- 11: Seitenwand
- 12: Anordnung
- 13: Spülgutaufnahme
- 14: Spülgutaufnahme
- 15: Spülgutaufnahme
- 16: Deckensprüheinrichtung
- 17: Pumpentopf
- 18: Filterelement
- 19: Düseneinrichtung
- 20: Ringströmung
- 21: Seitenwandung
- 22: Bodenwandung
- 23: Mikrofilter
- 24: Innenraum
- 25: Mikrofilterinnenseite
- 26: Mikrofilteraußenseite
- 27: Laugenpumpe
- 28: Öffnung
- 29: Ringspalt
- 30: Düsenabschnitt
- 31: Düsenabschnitt
- 32: Fluidaustrittsöffnung
- 33: Wasserweiche
- 34: Öffnung
- 35: Öffnung
- 36: Öffnung
- 37: Wandung
- 38: Sprüharm
- 39: Sprüharm
- 40: Spülprozess
- 41: Vorspülvorgang
- 42: Spülvorgang
- 43: Spülvorgang
- 44: Klarspülvorgang
- 45: Absaugen
- 46: Absaugen
- 47: Absaugen

- A: Auszugsrichtung
- E: Einschubrichtung
- R: Strömungsrichtung
- M: Spülflottenmenge
- t: Zeit
- t0: Zeitpunkt
- t1: Zeitpunkt
- t2: Zeitpunkt
- t3: Zeitpunkt
- t4: Zeitpunkt
- t5: Zeitpunkt
- t6: Zeitpunkt
- t7: Zeitpunkt
- t8: Zeitpunkt
- t9: Zeitpunkt
- t10: Zeitpunkt
- t11: Zeitpunkt
- t13: Zeitpunkt
- t14: Zeitpunkt
- t15: Zeitpunkt
- z: Tiefenrichtung

## Patentansprüche

1. Wasserführendes Haushaltsgerät (1), insbesondere Haushalts-Geschirrspülmaschine, mit einem Pumpentopf (17), einem zumindest abschnittsweise in dem Pumpentopf (17) angeordneten Filterelement (18) und einer Düseneinrichtung (19), die an dem Pumpentopf (17) angeordnet ist, wobei die Düseneinrichtung (19) dazu eingerichtet ist, eine lediglich in einer Strömungsrichtung (R) um das Filterelement (18) herumströmende Ringströmung (20) zwischen dem Pumpentopf (17) und dem Filterelement (18) zum Ablösen von Schmutz von dem Filterelement (18) zu erzeugen, wobei der Pumpentopf (17) eine Seitenwandung (21) aufweist, die das Filterelement (18) umgibt, so dass ein Ringspalt (29) zwischen dem Filterelement (18) und der Seitenwandung (21) ausgebildet ist, **dadurch gekennzeichnet, dass** die Düseneinrichtung (19) einen ersten Düsenabschnitt (30) umfasst, der von oben in den Ringspalt (29) hineinragt und/oder der um das Filterelement (18) herum gekrümmt ist.

2. Wasserführendes Haushaltsgerät nach Anspruch 1, **dadurch gekennzeichnet, dass** das Filterelement (18) einen Mikrofilter (23), der rohrförmig ausgebildet ist, eine einen Innenraum (24) des Mikrofilters (23) umschließende Mikrofilterinnenseite (25) und eine Mikrofilteraußenseite (26) umfasst, wobei die Düseneinrichtung (19) dazu eingerichtet ist, die Ringströmung (20) um die Mikrofilteraußenseite (26) zu erzeugen, so dass der Schmutz von der Mikrofilterinnenseite (25) zu dem Innenraum (24) hin abgelöst wird.

3. Wasserführendes Haushaltsgerät nach Anspruch 2, **gekennzeichnet durch** eine Laugenpumpe (27), die dazu eingerichtet ist, Spülflotte samt Schmutz direkt aus dem Innenraum (24) abzusaugen.

4. Wasserführendes Haushaltsgerät nach einem der Ansprüche 1 - 3, **dadurch gekennzeichnet, dass** die Düseneinrichtung (19) einen zweiten Düsenabschnitt (31) umfasst, an den der erste Düsenabschnitt (19) angeformt ist und der sich von dem Ringspalt (29) weg erstreckt.

5. Wasserführendes Haushaltsgerät nach einem der Ansprüche 1 - 4, **gekennzeichnet durch** eine Wasserweiche (33), die dazu eingerichtet ist, eine Fluidzufuhr zu der Düseneinrichtung (19) zu unterbrechen, so dass die Ringströmung (20) unterbrochen wird.

6. Wasserführendes Haushaltsgerät nach Anspruch 5, **gekennzeichnet durch** einen Sprüharm (38) und/oder durch zwei Sprüharme (38, 39) und/oder durch eine Deckensprüheinrichtung (16), wobei die Wasserweiche (33) dazu eingerichtet ist, eine Fluidzufuhr zu dem Sprüharm (38) und/oder den zwei Sprüharmen (38, 39) und/oder der Deckensprüheinrichtung (16) zu unterbrechen und/oder zu steuern.

7. Verfahren zum Betreiben eines wasserführenden Haushaltsgeräts nach einem der Ansprüche 1 - 6, wobei mit Hilfe einer Düseneinrichtung (19) ein lediglich in einer Strömungsrichtung (R) um ein Filterelement (18) herumströmende Ringströmung (20) zwischen einem Pumpentopf (17) und dem Filterelement (18) zum Ablösen von Schmutz von dem Filterelement (18) erzeugt wird, **dadurch gekennzeichnet, dass** ein erster Spülvorgang (42), bei dem Spülflotte innerhalb des wasserführenden Haushaltsgeräts (1) zirkuliert, durchgeführt wird, wobei nach dem ersten Spülvorgang (42) ein erstes Absaugen (45) von Spülflotte samt Schmutz mit Hilfe einer Laugenpumpe (27) durchgeführt wird und wobei die Ringströmung (20) während, insbesondere am Ende, des ersten Spülvorgangs (42) erzeugt wird.

8. Verfahren nach Anspruch 7, **dadurch gekennzeichnet, dass** die Ringströmung (20) zwischen 20 und 240 Sekunden lang, bevorzugt zwischen 40 und 220 Sekunden lang und weiter bevorzugt zwischen 60 und 180 Sekunden lang erzeugt wird.

9. Verfahren nach einem der Ansprüche 7 oder 8, **dadurch gekennzeichnet, dass** nach dem ersten Absaugen (45) ein zweiter Spülvorgang (43), bei dem Spülflotte innerhalb des wasserführenden Haushaltsgeräts (1) zirkuliert, durchgeführt wird, wobei nach dem zweiten Spülvorgang (43) ein zweites Absaugen (46) von Spülflotte samt Schmutz mit Hilfe der Laugenpumpe (27) durchgeführt wird, und wobei die Ringströmung (20) während, insbesondere am Ende, des zweiten Spülvorgangs (43) erzeugt wird.

10. Verfahren nach einem der Ansprüche 7 - 9, **dadurch gekennzeichnet, dass** die Ringströmung (20) mit Hilfe eines Umschaltens einer Wasserweiche (33) zugeschaltet wird.

## Claims

1. Water-using household appliance (1), in particular a household dishwasher, having a pump sump (17), a filter element (18) arranged at least partially in the pump sump (17), and a nozzle unit (19) which is arranged on the pump sump (17), wherein the nozzle unit (19) is designed to produce an annular flow (20) between the pump sump (17) and the filter element (18) in order to remove dirt from the filter element (18), said flow flowing around the filter element (18) only in one direction of flow (R), wherein the pump sump (17) has a side wall (21) which surrounds the filter element (18), so that an annular gap (29) is formed between the filter element (18) and the side wall (21), **characterised in that**
the nozzle unit (19) comprises a first nozzle section (30) which projects from above into the annular gap (29) and/or is curved around the filter element (18).

2. Water-using household appliance according to claim 1, **characterised in that** the filter element (18) comprises a microfilter (23) which is embodied as tubular, a microfilter inner side (25) enclosing an inner compartment (24) of the microfilter (23), and a microfilter outer side (26), wherein the nozzle unit (19) is designed to produce the annular flow (20) around the microfilter outer side (26), so that the dirt is removed from the microfilter inner side (25) to the inner compartment (24).

3. Water-using household appliance according to claim 2, **characterised by** a drain pump (27) which is designed to suck out washing liquor together with dirt directly from the inner compartment (24).

4. Water-using household appliance according to claims 1-3, **characterised in that** the nozzle unit (19) comprises a second nozzle section (31), onto which the first nozzle section (19) is integrally moulded and which extends away from the annular gap (29).

5. Water-using household appliance according to one of claims 1-4, **characterised by** a water switch (33) which is designed to interrupt a supply of fluid to the nozzle unit (19) so that the annular flow (20) is interrupted.

6. Water-using household appliance according to claim 5, **characterised by** a spray arm (38) and/or by two spray arms (38, 39) and/or by a ceiling spray device (16), wherein the water switch (33) is designed to interrupt and/or control a supply of fluid to the spray arm (38) and/or the two spray arms (38, 39) and/or the ceiling spray device (16).

7. Method for operating a water-using household device according to one of claims 1-6, wherein with the help of a nozzle unit (19) an annular flow (20) is produced between a pump sump (17) and the filter element (18) in order to remove dirt from the filter element (18), said flow flowing around a filter element (18) only in one direction of flow (R), **characterised in that** a first wash cycle (42) is performed, during which washing liquor circulates within the water-using household device (1), wherein after the first wash cycle (42) a first suction removal (45) of washing liquor together with dirt is performed with the help of a drain pump (27), and wherein the annular flow (20) is produced during, in particular at the end of, the first wash cycle (42).

8. Method according to claim 7, **characterised in that** the annular flow (20) is produced for between 20 and 240 seconds, preferably for between 40 and 220 seconds and further preferably for between 60 and 180 seconds.

9. Method according to claim 7 or 8, **characterised in that** after the first suction removal (45) a second wash cycle (43) is performed, during which washing liquor circulates within the water-using household appliance (1), wherein after the second wash cycle (43) a second suction removal (46) of washing liquor together with dirt is performed with the help of the drain pump (27), and wherein the annular flow (20) is produced during, in particular at the end of, the second wash cycle (43).

10. Method according to one of claims 7-9, **characterised in that** the annular flow (20) is actuated with the help of a switching of a water switch (33).

## Revendications

1. Appareil électroménager à circulation d'eau (1), en particulier lave-vaisselle électroménager, comprenant une pompe (17), un élément filtrant (18) agencé au moins en partie dans la pompe (17) et un dispositif à buse (19) agencé sur la pompe (17), dans lequel le dispositif à buse (19) est configuré pour produire un courant annulaire (20) circulant, uniquement dans le sens du courant (R), autour de l'élément filtrant (18) entre la pompe (17) et l'élément filtrant (18) afin de détacher la saleté de l'élément filtrant (18), dans lequel la pompe (17) présente des parois latérales (21), qui entourent l'élément filtrant (18) de sorte qu'il se forme un interstice annulaire (29) entre l'élément filtrant (18) et les parois latérales (21), **caractérisé en ce que**
le dispositif à buse (19) comprend une première section de buse (30), laquelle s'avance d'en haut à l'intérieur de l'interstice annulaire (29) et/ou laquelle est cintrée autour de l'élément filtrant (18).

2. Appareil électroménager à circulation d'eau selon la revendication 1, **caractérisé en ce que** l'élément filtrant (18) comprend un microfiltre (23), lequel est réalisé tubulaire, un côté intérieur de microfiltre (25) entourant un espace intérieur (24) du microfiltre (23) et un côté extérieur de microfiltre (26), le dispositif à buse (19) étant configuré pour produire le courant annulaire (20) autour du côté extérieur de microfiltre (26), de sorte que la saleté se détache du côté intérieur de microfiltre (25) vers l'espace intérieur (24).

3. Appareil électroménager à circulation d'eau selon la revendication 2, **caractérisé par** une pompe d'évacuation (27), laquelle est configurée pour aspirer le bain de lavage accompagné de la saleté directement hors de l'espace intérieur (24).

4. Appareil électroménager à circulation d'eau selon l'une des revendications 1-3, **caractérisé en ce que** le dispositif à buse (19) comprend une deuxième section de buse (31), sur laquelle la première section de buse (19) est formée et qui s'étend de l'interstice annulaire (29) en s'en éloignant.

5. Appareil électroménager à circulation d'eau selon l'une des revendications 1-4, **caractérisé par** un distributeur d'eau (33), lequel est configuré pour interrompre une amenée de fluide au dispositif à buse (19) de sorte que le courant annulaire (20) est interrompu.

6. Appareil électroménager à circulation d'eau selon la revendication 5, **caractérisé par** un bras aspergeur (38) et/ou par deux bras aspergeurs (38, 39) et/ou par un dispositif d'aspersion couvrant (16), le distributeur d'eau (33) étant configuré pour interrompre et/ou conduire l'amenée de fluide au bras aspergeur (38) et/ou aux deux bras aspergeurs (38, 39) et/ou au dispositif d'aspersion couvrant (16).

7. Procédé de fonctionnement d'un appareil électroménager à circulation d'eau selon l'une des revendications 1-6, dans lequel, à l'aide d'un dispositif à buse (19), un courant annulaire (20) circulant, uniquement dans le sens de courant (R), autour d'un élément filtrant (18), est produit entre une pompe (17) et l'élément filtrant (18) afin de détacher la saleté de l'élément filtrant (18), **caractérisé en ce que**
un premier processus de lavage (42), pendant lequel le bain de lavage circule à l'intérieur de l'appareil électroménager à circulation d'eau (1), est réalisé dans lequel après le premier processus de lavage (42), une première aspiration (45) du bain de lavage accompagné de la saleté, est réalisée à l'aide d'une pompe d'évacuation (27), et dans lequel le courant annulaire (20) est produit pendant le, en particulier à la fin du, premier processus de lavage (42).

8. Procédé selon la revendication 7, **caractérisé en ce que** le courant annulaire (20) est produit pendant de 20 à 240 secondes, de préférence entre 40 et 220 secondes et de manière encore préférée entre 60 et 180 secondes.

9. Procédé selon l'une des revendications 7 ou 8, **caractérisé en ce que** après la première aspiration (45), un deuxième processus de lavage (43), pendant lequel le bain de lavage circule à l'intérieur de l'appareil électroménager à circulation d'eau (1) est réalisé dans lequel après le deuxième processus de lavage (43), une deuxième aspiration (46) du bain de lavage accompagné de la saleté, est effectuée à l'aide de la pompe d'évacuation (27), et dans lequel le courant annulaire (20) est produit pendant le, en particulier à la fin du, deuxième processus de lavage (43).

10. Procédé selon l'une des revendications 7-9, **caractérisé en ce que** le courant annulaire (20) est activé au moyen d'une commutation d'un distributeur d'eau (33).
